# EUROPEAN PATENT SPECIFICATION

(11) **EP 4 492 052 B1**
(45) Date of publication and mention of the grant of the patent: **20.05.2026**
(21) Application number: 24181855.8
(22) Date of filing: 13.06.2024
(51) Int. Cl.: G01N 29/24, G01N 29/04, G01N 29/22, G01N 29/265

(54) **PROBE AND METHOD FOR NON-DESTRUCTIVE TESTING OF A COMPONENT**
SONDE UND VERFAHREN ZUR ZERSTÖRUNGSFREIEN PRÜFUNG EINES BAUTEILS
SONDE ET PROCÉDÉ DE CONTRÔLE NON DESTRUCTIF D'UN COMPOSANT

(30) Priority: 13.07.2023 GB 202310732
(43) Date of publication of application: 15.01.2025
(73) Proprietor: Rolls-Royce plc, London N1 9FX (GB)
(72) Inventor: Atia, Mohamed Ghareb Buomy, Derby, DE24 8BJ (GB); Sun, Erhui, Derby, DE24 8BJ (GB); Dong, Xin, Derby, DE24 8BJ (GB); Norton, Andrew D, Derby, DE24 8BJ (GB); Axinte, Dragos A, Derby, DE24 8BJ (GB); Mohammad, Abdelkhalick, Derby, DE24 8BJ (GB)
(74) Representative: Rolls-Royce plc

(56) References cited:
- EP-B1- 1 322 952
- EP-B1- 1 977 230
- EP-B1- 2 754 188
- US-A1- 2010 097 057
- US-A1- 2021 364 480

## Description

### Field

The present invention generally relates to a probe and a method for non-destructive testing of a component.

### Background

Non-destructive material testing using probes for detection of shrinkage, cracks and other flaws in the interior of a component is well known. Probes are also commonly used for non-destructive in situ testing of components, especially gas turbine engine components, such as turbine blades or compressor blades. Probes may use ultrasonic waves for the non-destructive testing of a component.

In many applications, probes are required to operate at a confined space which may put limitations on their movement. In such confined spaces, conventional probes may not operate effectively due to such limitations on the movement. Further, for accurate testing of the component, there is a need that the probe maintains substantially continuous contact with the component. Moreover, when a surface of the component is curved, the conventional probes may not be able to inspect every portion of the curved component, and therefore, may not detect worn or damaged areas in the component.

Thus, the conventional probes may not work effectively and efficiently in the confined spaces, which may lead to undiscovered cracks of a target component, such as a component of a prime mover. If not discovered on time, such cracks may reduce lifetime of the prime mover and degrade the working of the prime mover. Hence, there is a need for a probe which can overcome above-mentioned drawbacks when used for non-destructive testing of a component.

European patent EP 1322952 B1 discloses an inspection apparatus for remote inspection of the trepan radius area of the inlet sleeve of a steam turbine. The inspection apparatus provides a sealed volume between a pair of inflatable bladders for introducing a liquid couplant for the immersion of ultrasonic transducers. A laser line generator generates a beam of light visible through a camera that impinges upon an inlet bell seal when the apparatus is in an inspection position within the inlet sleeve. Guide vanes provide centering and generate an insertion force during air assisted insertion of apparatus. Transducers are indexed axially and circumferentially by the independent rotation of axial drive gear and longitudinal drive gear engaged with a pattern of gear teeth formed as a combination of circumferential spur gear teeth and axial rack gear teeth cut into a single surface of a spline shaft.

United States patent application US 2010/0097057 A1 discloses an inspection apparatus that has at least one probe receiving unit. The at least one probe receiving unit is capable of processing data corresponding to one or more of image information of the type that can be generated by a visual inspection probe, eddy current information of the type that can be generated by a eddy current probe, and ultrasound information of the type that can be generated by a ultrasound probe.

### Summary

According to the invention, there is provided a probe for non-destructive testing of a component as set out in claim 1.

The actuation of the flexible actuator between the non-actuated state and the actuated state may allow the probe to be used for non-destructive testing of the component in confined spaces as well. As the actuated length is greater than the non-actuated length, the flexible actuator may remove limitations on a movement of the probe, especially for in-situ applications. As a result, the probe may be able to effectively determine cracks and other flaws in the interior of the component. Moreover, due to extension of the flexible actuator along the longitudinal axis, the probe of the present disclosure may be more effective as compared to conventional probes for non-destructive testing of a component with a curved surface. Therefore, the flexible actuator may improve effectiveness and increase efficiency of the probe of the present disclosure. The timely detection of cracks and irregularities in the component may also improve operational life of the component.

The actuating pipe allows the tubular body to receive the pressurized fluid within the internal volume. The pressurized fluid within the internal volume allows the tubular body to inflate and axially expand along the longitudinal axis. In some cases., the tubular body may be a cylindrical shaped body. In some other cases, the tubular body may have a shape different than the cylindrical shape. In some cases, the tubular body may include a polygonal shape, instead of a cylindrical shape. As the actuator passage fluidly connects the internal passage of the tube with the head, the actuator passage is used to bypass any cables and/or additional pipes extending from the tube to a sensor (e.g., an ultrasonic sensor) disposed in the head. Specifically, the actuator passage may at least partially receive such cables and/or additional pipes therethrough. In some embodiments, the tubular body further includes a first end wall disposed at the first body end and a second end wall disposed at the second body end. The first end wall is connected to the actuating pipe. The first end wall and the second end wall together delimit the internal volume. The first end wall defines an opening therethrough disposed in fluid communication with the first pipe end and the internal volume. The opening defined in the first end wall allows fluid communication between the first pipe end and the internal volume. In this way, the pressurized fluid is received within the internal volume of the tubular body of the flexible actuator.

In some embodiments, the probe further includes a fluid pipe at least partially received within the internal passage via the first tube end. The fluid pipe is fluidly connected to the first pipe end of the actuating pipe. The fluid pipe is configured to supply the pressurized fluid to the actuating pipe via the first pipe end, such that the flexible actuator is remotely actuatable by the fluid pipe. The fluid may be water or air, or any other gas or liquid based on application requirements.

In some embodiments, the probe further includes a pumping device disposed in fluid communication with the fluid pipe and located outside the tube. The pumping device is configured to supply the pressurized fluid to the fluid pipe. The pumping device may supply the pressurized fluid at a set pressure based on application requirements. In some cases, the pumping device may be an air syringe to supply pressurized air to the fluid pipe. In some cases, the pumping device may be a hydraulic pump to supply pressurized water to the fluid pipe. The pumping device may be manually operated or controlled via an electrical or electronic system.

In some embodiments, the tubular body includes a cylindrical outer surface extending along the longitudinal axis. The tubular body further includes a plurality of annular ribs disposed on the cylindrical outer surface and spaced apart from each other with respect to the longitudinal axis. The plurality of annular ribs defines a plurality of annular grooves therebetween, such that each pair of adjacent annular ribs from the plurality of annular ribs defines therebetween a corresponding annular groove from the plurality of annular grooves. The plurality of annular ribs includes a first annular rib disposed proximal to the first body end of the tubular body and a second annular rib disposed proximal to the second body end of the tubular body. In some cases, the plurality of annular ribs includes a total of three annular ribs and the plurality of annular grooves includes a total of two annular grooves. In some cases, the plurality of annular ribs includes more than three annular ribs and the plurality of annular grooves includes more than two annular grooves. A count of the plurality of annular ribs and corresponding plurality of annular grooves may depend on application requirements. The annular ribs may be discrete or connected annular ribs.

In some embodiments, the probe further includes a plurality of rings corresponding to the plurality of annular grooves and disposed around the cylindrical outer surface of the tubular body. Each ring from the plurality of rings is at least partially received within the corresponding annular groove. The plurality of rings is configured to restrict a radial expansion of the tubular body perpendicular to the longitudinal axis in response to the inflation by the pressurized fluid. In other words, the plurality of rings may allow smooth switching of the flexible actuator between the non-actuated state and the actuated state by allowing only axial movement of the flexible actuator along the longitudinal axis. In some cases, the plurality of rings includes a total of two rings corresponding to two annular grooves from the plurality of annular grooves. A count of the plurality of annular ribs, the plurality of annular grooves, and the plurality of rings may be decided based on a required stiffness of the flexible actuator for a particular application.

In some embodiments, each ring is made of a rigid material. The rigid material of each ring may facilitate the restriction of radial expansion of the tubular body perpendicular to the longitudinal axis in response to the inflation by the pressurized fluid.

In some embodiments, the tubular body further includes a wide tubular portion extending along the longitudinal axis and defining the first body end and the cylindrical outer surface. The tubular body further includes a narrow tubular portion extending from the wide tubular portion along the longitudinal axis and defining the second body end. The wide tubular portion includes an annular step surface circumferentially disposed around the narrow tubular portion. The wide tubular portion includes a first end section extending between the first body end and the first annular rib. The wide tubular portion further includes a second end section extending between the annular step surface and the second annular rib. The wide tubular portion and the narrow tubular portion together form a continuous cylindrical internal surface that defines the actuator passage. The continuous cylindrical internal surface extends between the first body end and the second body end. A maximum diameter of the wide tubular portion is greater than a maximum diameter of the narrow tubular portion. When the internal volume is filled with the pressurized fluid, the wide annular portion inflates and axially expands along the longitudinal axis, thereby actuating the flexible actuator from the non-actuated state to the actuated state. Further, the dimensions of the wide tubular portion and the narrow tubular portion may be selected based on corresponding dimensions of the tube and the head.

In some embodiments, the probe further includes a first cover attaching the tubular body to the second tube end. The first cover includes an annular body. The annular body includes a first open end facing the second tube end of the tube, an opposing second open end, a first end surface disposed at the first open end, a second end surface disposed at the second open end, and an internal surface extending between the first end surface and the second end surface. The first cover further includes an annular stop radially extending from the internal surface of the annular body and disposed proximal to the second end surface. The annular stop includes a circumferential cut-out. The first cover further includes a recess disposed on the internal surface of the annular body. The recess extends from the circumferential cut-out to the first end surface. The first end surface of the annular body is attached to the second tube end of the tube. The annular body receives therein the first end section of the wide tubular portion via the second open end, such that the first end section engages with the annular stop and the first annular rib engages with the second end surface. The first cover functions as a connector to easily connect / disconnect the flexible actuator and the tube. The annular stop, the circumferential cut-out, and the recess may facilitate attachment of the tube and the flexible actuator. The circumferential cut-out fluidly communicates the internal passage and the actuator passage. The recess is configured to receive a portion of the actuating pipe. The first cover may be attached to the tubular body of the flexible actuator by friction fit, or gluing. The first cover may be attached to the second tube end of the tube by gluing, or other commonly known joining techniques.

In some embodiments, a thickness of the first end surface is greater than a thickness of the second end surface. The internal surface includes a narrow surface portion extending from the first end surface to the annular stop. The internal surface further includes a wide surface portion extending from the annular stop to the second end surface. Dimensions of the narrow surface portion and the wide surface portion are selected so as to allow precise attachment between the tube and the flexible actuator.

In some embodiments, the recess tapers from the circumferential cut-out to the first end surface. The tapered portion of the recess may allow the actuating pipe to at least partially extend through the recess.

In some embodiments, the probe further includes a second cover attaching the tubular body to the head. The second cover includes a narrow annular portion and a wide annular portion disposed around and extending at least partially from the narrow annular portion. The narrow annular portion includes an inner annular step surface extending circumferentially within the wide annular portion. The wide annular portion includes an outer annular step surface disposed circumferentially around the narrow annular portion. The narrow annular portion at least partially receives therein the narrow tubular portion of the tubular body, such that the inner annular step surface engages with the annular step surface of the wide tubular portion. The wide annular portion receives therein the second end section of the wide tubular portion, such that the wide annular portion engages with the second annular rib. The narrow annular portion is at least partially received within the head via the first head end. The second cover functions as a connector to easily connect / disconnect the flexible actuator and the head. The second cover may be attached to the tubular body of the flexible actuator by friction fit, or gluing. The second cover may be attached to the first head end of the head by friction fit, gluing, or other commonly known joining techniques.

Therefore, the first cover and the second cover function as connectors for attaching the flexible actuator to the tube and the head, respectively.

In some embodiments, the flexible actuator is integrally manufactured by additive manufacturing. This may increase manufacturing agility of the flexible actuator. Moreover, the integral manufacturing of the flexible actuator by additive manufacturing may be less costly process as compared to other alternatives.

In some embodiments, the flexible actuator is made of an elastomeric material. The elastomeric material facilitates inflation and axial expansion of the tubular body along the longitudinal axis. In some embodiments, the elastomeric material is silicone. In some cases, the elastomeric material may be rubber.

In some embodiments, the probe is an ultrasonic probe that is configured to transmit ultrasonic waves to the surface of the component. The head of the ultrasonic probe may include an ultrasonic sensor to transmit the ultrasonic waves to the surface of the component.

According to the invention, there is provided a method for non-destructive testing of a component as set out in claim 14.

In some embodiments, the component is an engine component. The probe and the method of the present disclosure may allow improved working efficiency and increased operating life of the engine component by efficient and accurate non-destructive testing of the engine component.

In some embodiments, the engine component is a component of a gas turbine engine. The probe and the method of the present disclosure may allow improved performance of the gas turbine engine by timely determining the cracks and irregularities in the component of the gas turbine engine.

In some embodiments, the component is a component of a pipeline, a nuclear plant, or a chemical plant. The probe and the method of the present disclosure may allow improved performance of the pipeline, the nuclear plant, or the chemical plant by efficient and accurate non-destructive testing of the component of the pipeline, the nuclear plant, or the chemical plant. As noted elsewhere herein, the present disclosure may relate to a probe and a method for non-destructive testing of a component of a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

### Brief description of the drawings

Embodiments will now be described by way of example only, with reference to the Figures, in which:
**FIG. 1** is a sectional side view of a gas turbine engine;
**FIG. 2A** is a schematic side view of a probe for non-destructive testing of a component, wherein a flexible actuator of the probe is shown in a non-actuated state;
**FIG. 2B** is a schematic side view of the probe of FIG. 2A, wherein the flexible actuator is shown in an actuated state;
**FIG. 3A** is a partial schematic side view of the probe of FIG. 2A;
**FIG. 3B** is a partial exploded view of the probe of FIG. 2A;
**FIG. 3C** is a partial sectional side perspective view of the probe of FIG. 2A;
**FIG. 4A** is a perspective front view of the flexible actuator of the probe of FIG. 2A;
**FIG. 4B** is a side view of the flexible actuator of FIG. 4A in the non-actuated state;
**FIG. 4C** is a side view of the flexible actuator of FIG. 4A in the actuated state;
**FIG. 4D** is a sectional side view of the flexible actuator of FIG. 4A in the non-actuated state;
**FIG. 4E** is a perspective sectional view of the flexible actuator of FIG. 4B, taken along a line A-A';
**FIG. 4F** is a perspective sectional view of the flexible actuator of FIG. 4B, taken along a line B-B';
**FIG. 5A** is a side view of an assembly of the flexible actuator, a first cover, and a second cover of the probe of FIG. 2A;
**FIG. 5B** is an exploded view of the assembly of FIG. 5A;
**FIG. 5C** is a perspective front view of the assembly of FIG. 5A;
**FIG. 5D** is a front view of the assembly of FIG. 5A;
**FIG. 6A** is a front perspective view of the first cover of FIG. 5A;
**FIG. 6B** is a rear perspective view of the first cover of FIG. 6A;
**FIG. 6C** is a front view of the first cover of FIG. 6A;
**FIG. 6D** is a rear view of the first cover of FIG. 6A;
**FIG. 7A** is a front perspective view of the second cover of FIG. 5A;
**FIG. 7B** is a rear perspective view of the second cover of FIG. 7A; and
**FIG. 8** is a flowchart illustrating a method for non-destructive testing of the component using the probe of FIG. 2A.

### Detailed description

Aspects and embodiments of the present disclosure will now be discussed with reference to the accompanying figures. Further aspects and embodiments will be apparent to those skilled in the art.

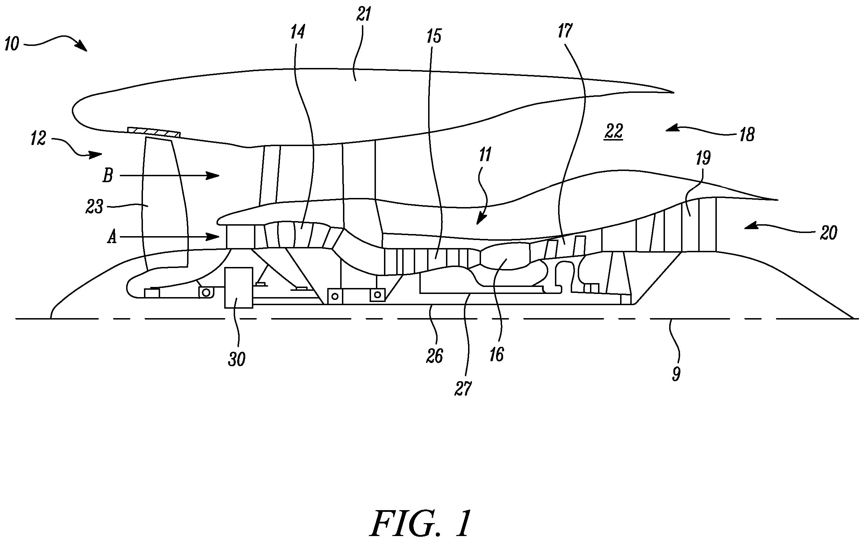

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine 19" and "low pressure compressor 14" referred to herein may alternatively be known as the "intermediate pressure turbine 19" and "intermediate pressure compressor 14", respectively. Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial and circumferential directions are mutually perpendicular.

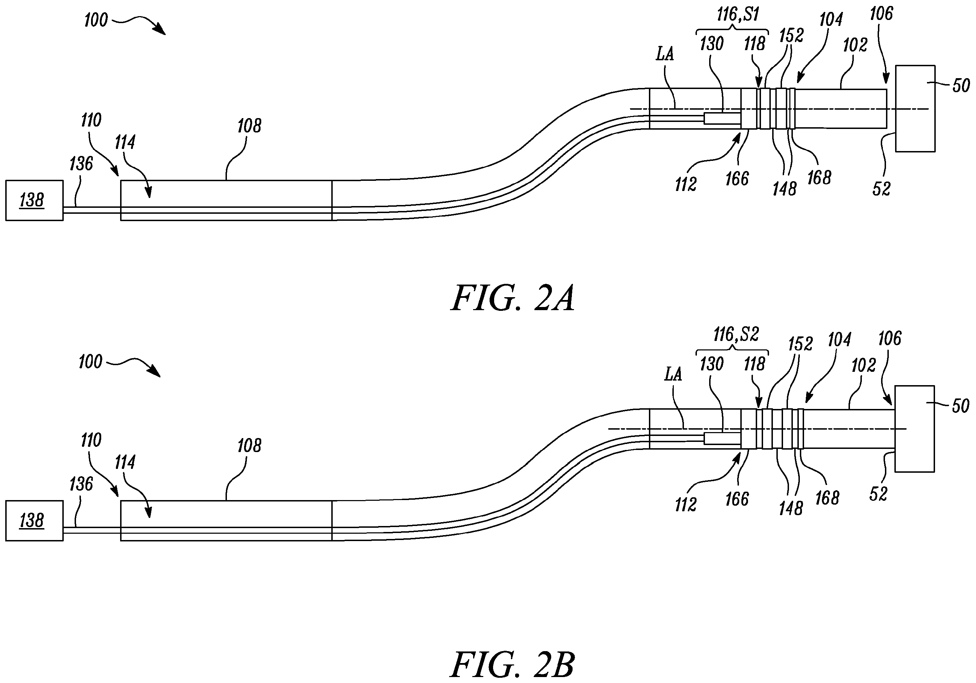

**FIG. 2A** is a schematic side view of a probe 100 for non-destructive testing of a component 50, according to an embodiment of the present disclosure. In some embodiments, the component 50 is an engine component. In some embodiments, the component 50 is a component of the gas turbine engine 10 shown in FIG. 1. In some embodiments, the component 50 is a component of a pipeline, a nuclear plant, or a chemical plant (not shown).

The probe 100 includes a head 102 configured to transmit a signal or a wave (e.g. acoustic waves) to a surface 52 of the component 50 for non-destructive testing of the component 50. In some embodiments, the probe 100 is an ultrasonic probe that is configured to transmit ultrasonic waves to the surface 52 of the component 50. In some embodiments, the head 102 may include an ultrasonic sensor to transmit ultrasonic waves to the surface 52 of the component 50 and thereby detect any cracks and irregularities in the component 50. The head 102 includes a first head end 104 facing away from the component 50 and an opposing second head end 106 facing the component 50. The first head end 104 is open.

The probe 100 further includes a tube 108 spaced apart from the head 102. The tube 108 is shown as transparent in FIGS. 2A and 2B for illustrative purposes. The tube 108 includes a first tube end 110 distal to the head 102 and an opposing second tube end 112 proximal to the head 102. Each of the first tube end 110 and the second tube end 112 is open. The tube 108 defines an internal passage 114 therein extending between the first tube end 110 and the second tube end 112. In an embodiment, a sensor wire (not shown) associated with the ultrasonic sensor in the head 102 may pass through the internal passage 114.

The probe 100 further includes a flexible actuator 116 disposed between the head 102 and the tube 108. The flexible actuator 116 is attached with the first head end 104 of the head 102 and the second tube end 112 of the tube 108. The flexible actuator 116 defines a longitudinal axis LA along its length. The flexible actuator 116 is configured to be actuated between a non-actuated state S1 and an actuated state S2. In FIG. 2A, the flexible actuator 116 is shown in the non-actuated state S1. FIG. 2B is a schematic side view of the probe 100, wherein the flexible actuator 116 is shown in the actuated state S2, according to an embodiment of the present disclosure.

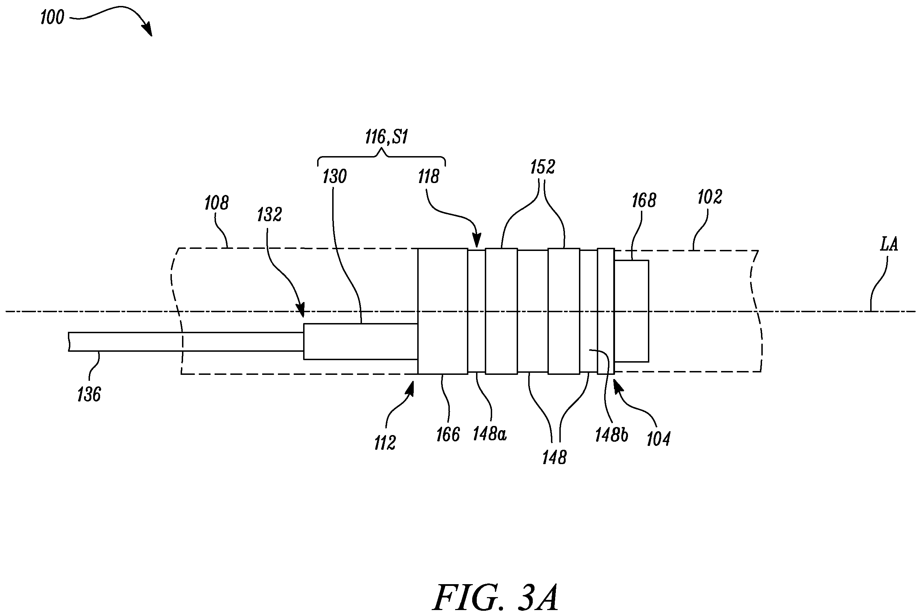

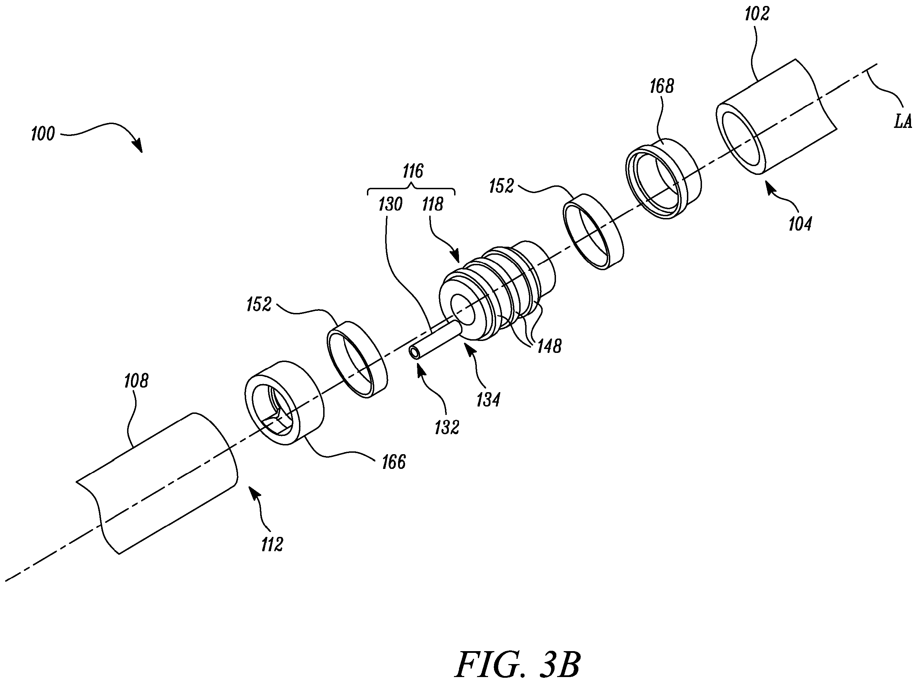

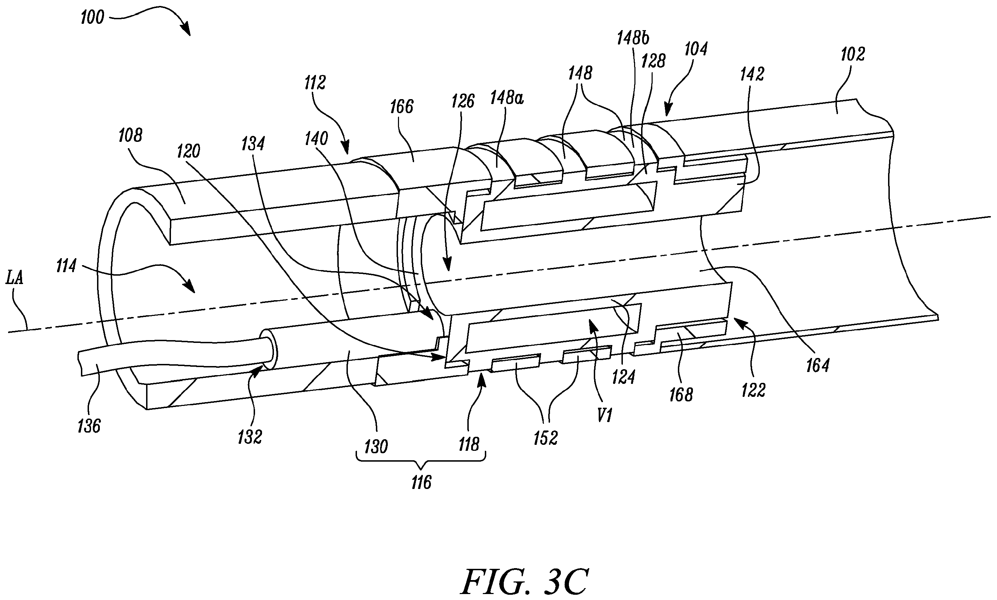

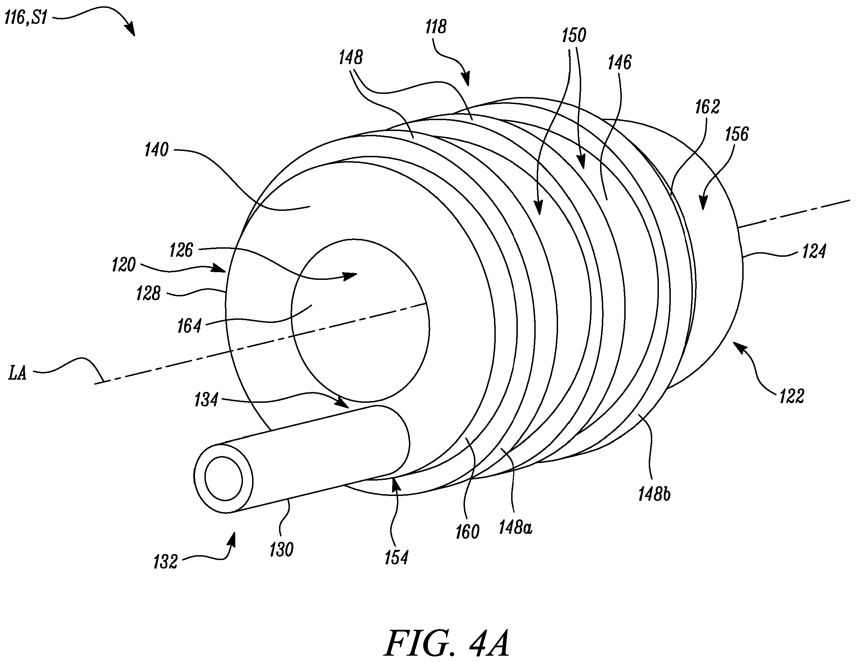

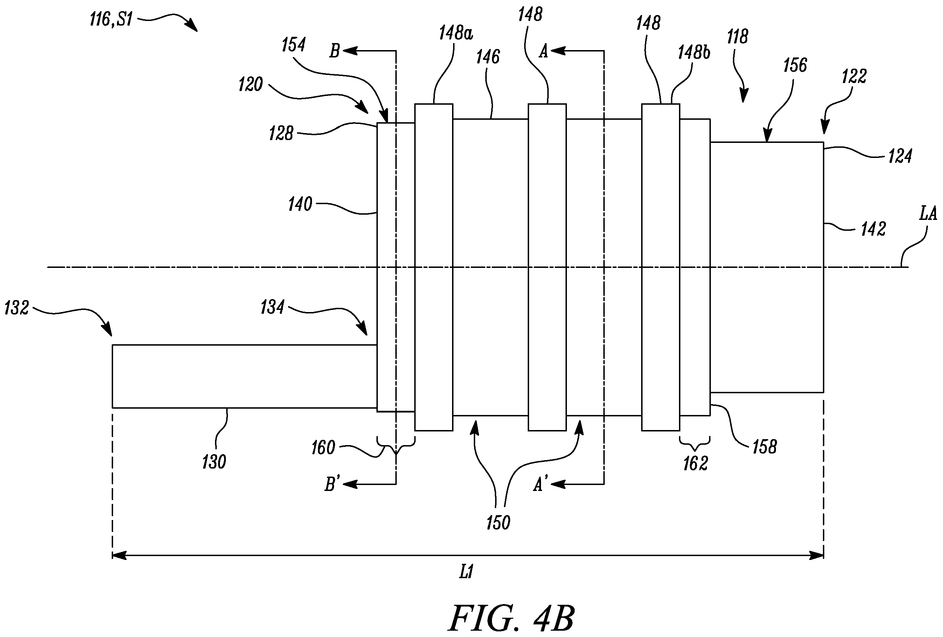

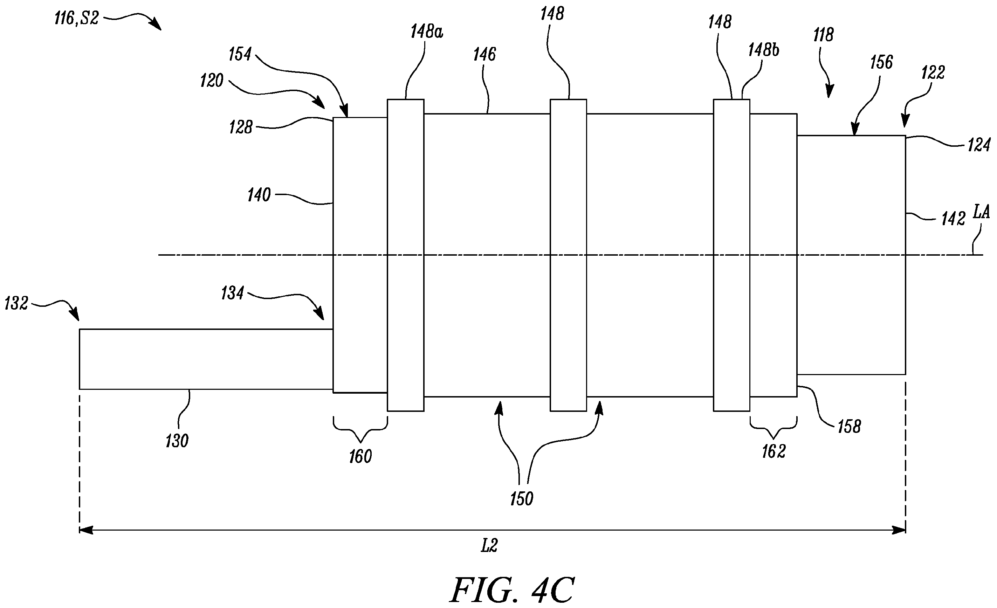

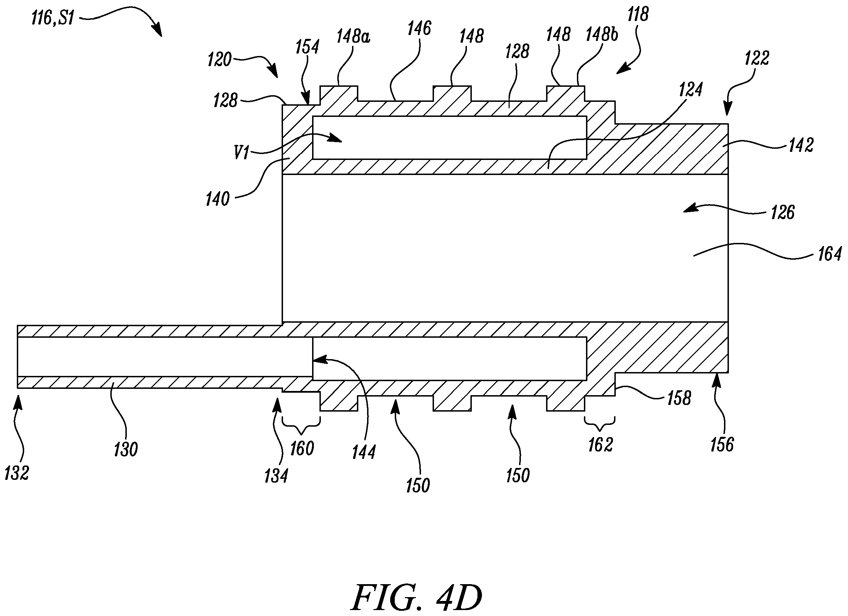

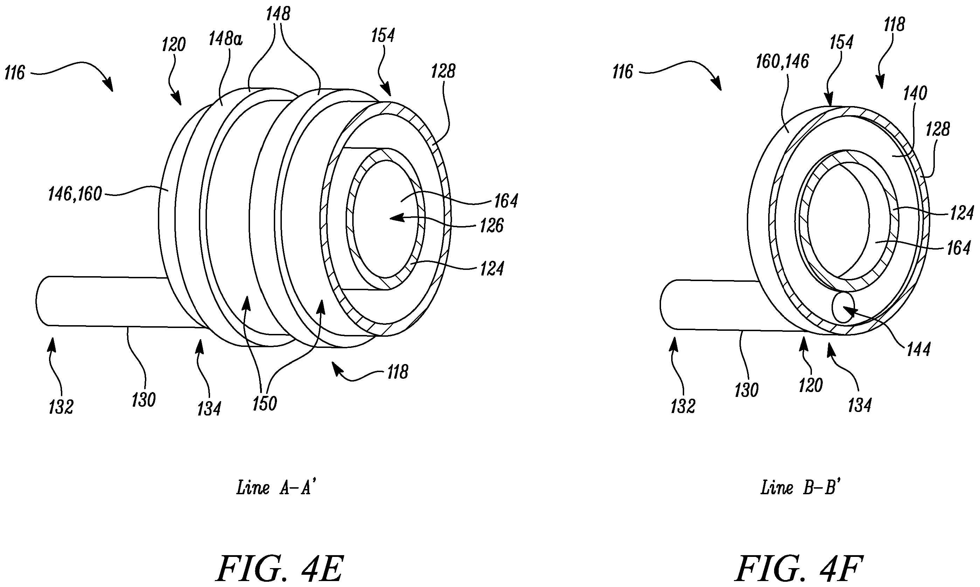

**FIG. 3A** is a partial schematic side view of the probe 100 of FIG. 2A, according to an embodiment of the present disclosure. **FIG. 3B** is a partial exploded view of the probe 100 of FIG. 2A, according to an embodiment of the present disclosure. The tube 108 and the head 102 are shown as transparent in FIG. 3B for illustrative purposes. **FIG. 3C** is a partial sectional side perspective view of the probe 100 of FIG. 2A, according to an embodiment of the present disclosure. **FIG. 4A** is a perspective front view of the flexible actuator 116, according to an embodiment of the present disclosure. **FIG. 4B** is a side view of the flexible actuator 116 in the non-actuated state S1, according to an embodiment of the present disclosure. **FIG. 4C** is a side view of the flexible actuator 116 in the actuated state S2, according to an embodiment of the present disclosure. **FIG. 4D** is a sectional side view of the flexible actuator 116 in the non-actuated state S1, according to an embodiment of the present disclosure. **FIG. 4E** is a perspective sectional view of the flexible actuator 116 of FIG. 4B, taken along a line A-A', according to an embodiment of the present disclosure. **FIG. 4F** is a perspective sectional view of the flexible actuator 116 of FIG. 4B, taken along a line B-B', according to an embodiment of the present disclosure.

Referring to FIGS. 2A to 4F, in the non-actuated state S1, the flexible actuator 116 extends for a non-actuated length L1 (shown in FIG. 4B) along the longitudinal axis LA. In the actuated state S2, the flexible actuator 116 expands axially along the longitudinal axis LA relative to the non-actuated state S1 and extends for an actuated length L2 (shown in FIG. 4C) along the longitudinal axis LA. The actuated length L2 is greater than the non-actuated length L1. In some embodiments, the actuated length L2 is greater than the non-actuated length L1 by about 5 mm. Upon switching the flexible actuator 116 from the actuated state S2 to the non-actuated state S1, the flexible actuator 116 returns to the non-actuated length L1. In other words, the non-actuated state S1 of the flexible actuator 116 is a default state of the flexible actuator 116. The flexible actuator 116 is remotely actuatable from the first tube end 110 between the non-actuated state S1 and the actuated state S2.

The flexible actuator 116 includes a tubular body 118 extending along the longitudinal axis LA between a first body end 120 facing the tube 108 and an opposing second body end 122 facing the head 102. The tubular body 118 includes an inner annular portion 124 defining an actuator passage 126 therethrough. The tubular body 118 further includes an outer annular portion 128 disposed around the inner annular portion 124. The actuator passage 126 fluidly connects the internal passage 114 of the tube 108 with the head 102. The inner annular portion 124 and the outer annular portion 128 define an internal volume V1 (shown in FIG. 3C) therebetween, such that the tubular body 118 is inflatable. In some embodiments., the tubular body 118 may be a cylindrical shaped body. In some other embodiments, the tubular body 118 may have a shape different than the cylindrical shape.

The flexible actuator 116 further includes an actuating pipe 130 connected to the tubular body 118. In some embodiments, the flexible actuator 116 is integrally manufactured by additive manufacturing. In some embodiments, the actuating pipe 130 may be connected to the tubular body 118 by welding, or other joining methods. The actuating pipe 130 extends along the longitudinal axis LA from the tubular body 118 towards the first tube end 110 of the tube 108. The actuating pipe 130 includes a first pipe end 132 distal to the tubular body 118 and an opposing second pipe end 134 disposed in fluid communication with the internal volume V1 of the tubular body 118. The actuating pipe 130 is configured to receive a pressurized fluid through the first pipe end 132.

In some embodiments, the probe 100 further includes a fluid pipe 136 (shown in FIGS. 2A and 2B) at least partially received within the internal passage 114 via the first tube end 110. The fluid pipe 136 is fluidly connected to the first pipe end 132 of the actuating pipe 130. The fluid pipe 136 is configured to supply the pressurized fluid to the actuating pipe 130 via the first pipe end 132, such that the flexible actuator 116 is remotely actuatable by the fluid pipe 136. Upon receiving the pressurized fluid within the internal volume V1 of the tubular body 118, the tubular body 118 inflates and axially expands along the longitudinal axis LA, thereby actuating the flexible actuator 116 from the non-actuated state S1 to the actuated state S2. The fluid may be water or air, or any other gas or liquid based on application requirements. In some embodiments, the flexible actuator 116 (i.e., the tubular body 118) is made of an elastomeric material. In some embodiments, the elastomeric material is silicone. In some embodiments, the elastomeric material may be rubber.

In some embodiments, the probe 100 further includes a pumping device 138 disposed in fluid communication with the fluid pipe 136 and located outside the tube 108. The pumping device 138 is configured to supply the pressurized fluid to the fluid pipe 136. The pumping device 138 may supply the pressurized fluid at a set pressure based on application requirements. In some embodiments, the pumping device 138 may be an air syringe (not shown) to supply pressurized air to the fluid pipe 136. In some embodiments, the pumping device 138 may be a hydraulic pump (not shown) to supply pressurized water to the fluid pipe 136.

In some embodiments, the tubular body 118 further includes a first end wall 140 disposed at the first body end 120. The tubular body 118 further includes a second end wall 142 disposed at the second body end 122. The first end wall 140 is connected to the actuating pipe 130. The first end wall 140 and the second end wall 142 together delimit the internal volume V1. The first end wall 140 defines an opening 144 (shown in FIGS. 4D and 4F) therethrough disposed in fluid communication with the first pipe end 132 and the internal volume V1. In other words, the opening 144 fluidly communicates the first pipe end 132 and the internal volume V1. Therefore, the internal volume V1 of the tubular body 118 receives the pressurized fluid from the fluid pipe 136 via the actuating pipe 130 and the opening 144 in the first end wall 140.

In some embodiments, the tubular body 118 includes a cylindrical outer surface 146 extending along the longitudinal axis LA. The tubular body 118 further includes a plurality of annular ribs 148 disposed on the cylindrical outer surface 146 and spaced apart from each other with respect to the longitudinal axis LA. The plurality of annular ribs 148 defines a plurality of annular grooves 150 therebetween, such that each pair of adjacent annular ribs 148 from the plurality of annular ribs 148 defines therebetween a corresponding annular groove 150 from the plurality of annular grooves 150. The plurality of annular ribs 148 includes a first annular rib 148a disposed proximal to the first body end 120 of the tubular body 118. The plurality of annular ribs 148 further includes a second annular rib 148b disposed proximal to the second body end 122 of the tubular body 118. In some embodiments, the plurality of annular ribs 148 includes a total of three annular ribs 148 and the plurality of annular grooves 150 includes a total of two annular grooves 150. In some embodiments, the plurality of annular ribs 148 includes more than three annular ribs 148 and the plurality of annular grooves 150 includes more than two annular grooves 150. A count of the plurality of annular ribs 148 and the corresponding plurality of annular grooves 150 may depend on application requirements.

In some embodiments, the probe 100 further includes a plurality of rings 152 (shown in FIGS. 3B and 3C) corresponding to the plurality of annular grooves 150. The plurality of rings 152 is disposed around the cylindrical outer surface 146 of the tubular body 118. Each ring 152 from the plurality of rings 152 is at least partially received within the corresponding annular groove 150. The plurality of rings 152 is configured to restrict a radial expansion of the tubular body 118 perpendicular to the longitudinal axis LA in response to the inflation by the pressurized fluid. In other words, the plurality of rings 152 may allow smooth switching of the flexible actuator 116 between the non-actuated state S1 and the actuated state S2 by allowing only axial movement of the flexible actuator 116 along the longitudinal axis LA. In some embodiments, the plurality of rings 152 includes a total of two rings 152 corresponding to two annular grooves 150 from the plurality of annular grooves 150. In some embodiments, each ring 152 is made of a rigid material (e.g., a plastic). A count of the plurality of annular ribs 148, the plurality of annular grooves 150, and the plurality of rings 152 may be decided based on required stiffness of the flexible actuator 116 for a particular application.

In some embodiments, the tubular body 118 further includes a wide tubular portion 154 extending along the longitudinal axis LA and defining the first body end 120 and the cylindrical outer surface 146. The tubular body 118 further includes a narrow tubular portion 156 extending from the wide tubular portion 154 along the longitudinal axis LA and defining the second body end 122. The wide tubular portion 154 includes an annular step surface 158 circumferentially disposed around the narrow tubular portion 156. The wide tubular portion 154 includes a first end section 160 extending between the first body end 120 and the first annular rib 148a. The wide tubular portion 154 further includes a second end section 162 extending between the annular step surface 158 and the second annular rib 148b. The wide tubular portion 154 and the narrow tubular portion 156 together form a continuous cylindrical internal surface 164 that defines the actuator passage 126.

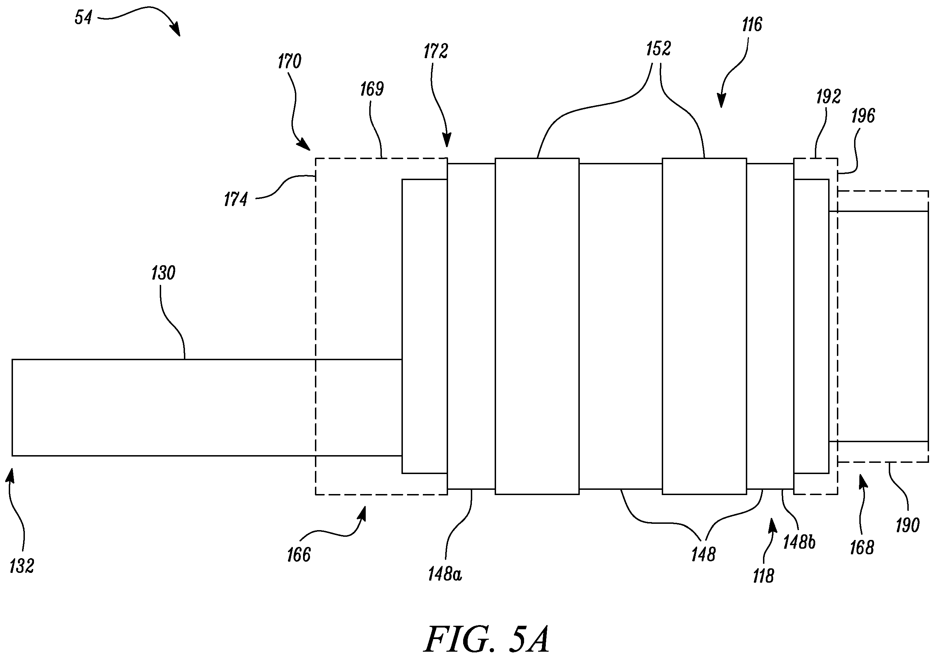

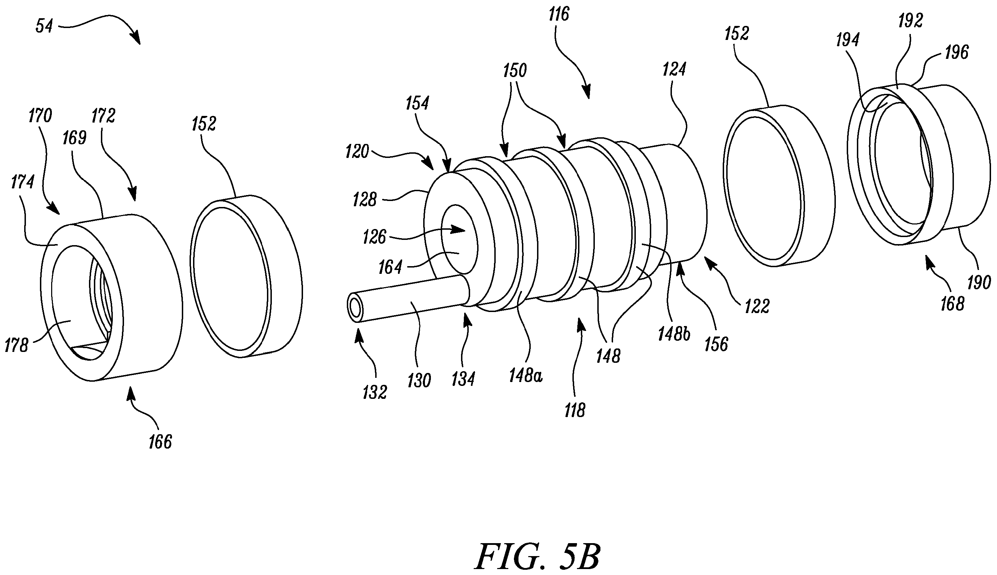

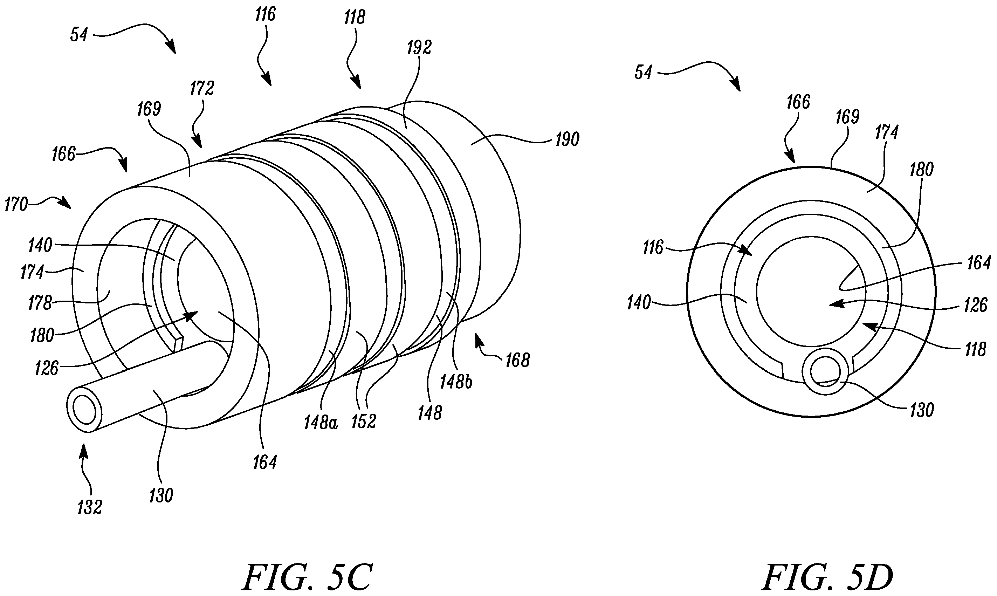

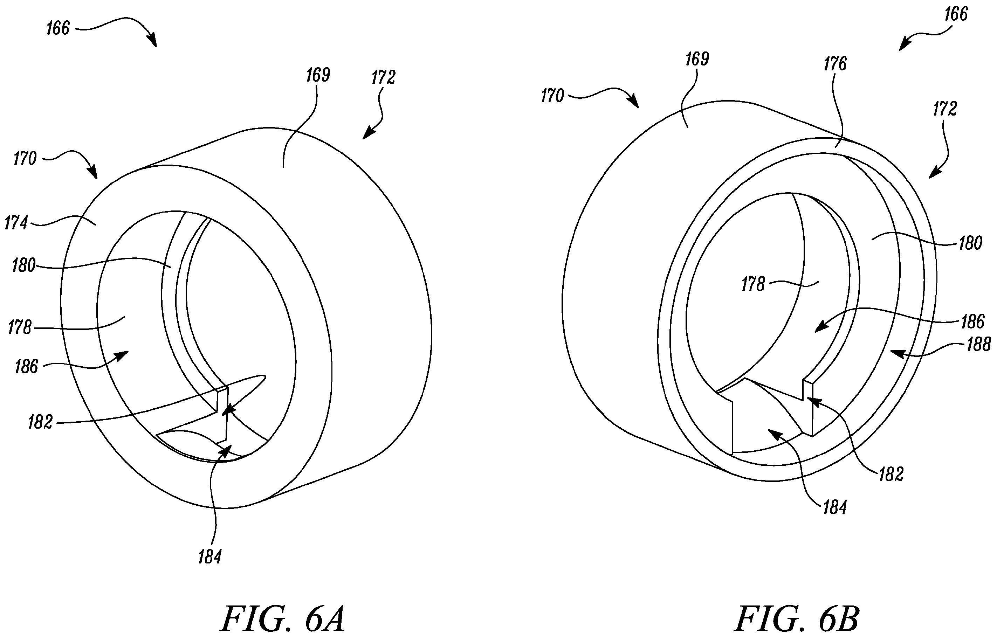

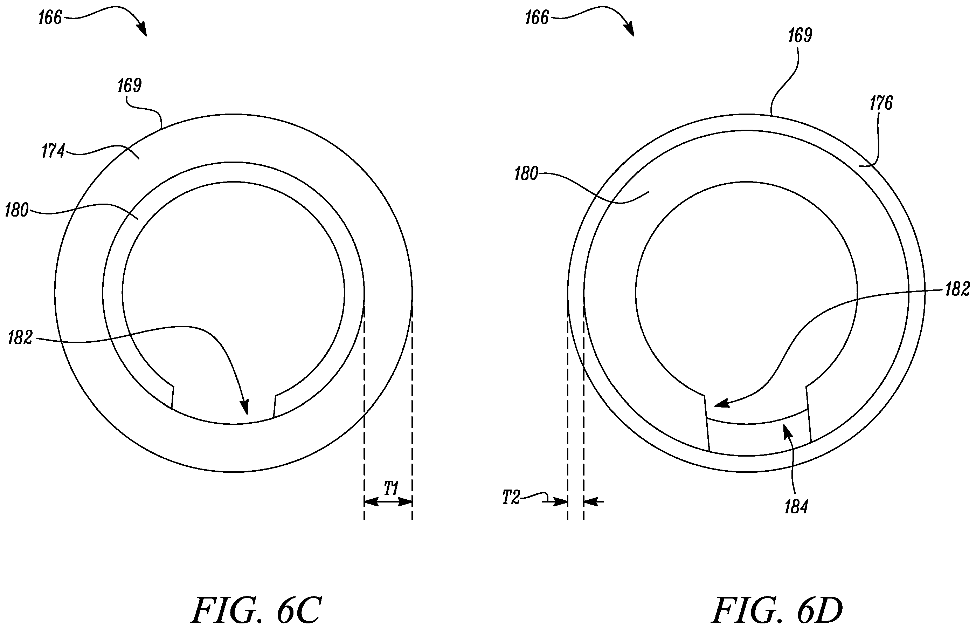

**FIG. 5A** is a side view of an assembly 54 of the flexible actuator 116, a first cover 166, and a second cover 168 of the probe 100 of FIG. 2A, according to an embodiment of the present disclosure. **FIG. 5B** is an exploded view of the assembly 54, according to an embodiment of the present disclosure. **FIG. 5C** is a perspective front view of the assembly 54, according to an embodiment of the present disclosure. **FIG. 5D** is a front view of the assembly 54, according to an embodiment of the present disclosure. **FIG. 6A** is a front perspective view of the first cover 166 of FIG. 5A, according to an embodiment of the present disclosure. **FIG. 6B** is a rear perspective view of the first cover 166, according to an embodiment of the present disclosure. **FIG. 6C** is a front view of the first cover 166, as viewed from the first open end 170, according to an embodiment of the present disclosure. **FIG. 6D** is a rear view of the first cover 166, as viewed from the second open end 172, according to an embodiment of the present disclosure.

Referring to FIGS. 2A to 6D, in some embodiments, the first cover 166 attaches the tubular body 118 to the second tube end 112 of the tube 108. The first cover 166 includes an annular body 169. The annular body 169 includes a first open end 170 facing the second tube end 112 of the tube 108, an opposing second open end 172, a first end surface 174 disposed at the first open end 170, a second end surface 176 (shown in FIGS. 6B and 6D) disposed at the second open end 172, and an internal surface 178 extending between the first end surface 174 and the second end surface 176. The first cover 166 further includes an annular stop 180 radially extending from the internal surface 178 of the annular body 169. The annular stop 180 is disposed proximal to the second end surface 176. The annular stop 180 includes a circumferential cut-out 182. The first cover 166 further includes a recess 184 disposed on the internal surface 178 of the annular body 169. The recess 184 extends from the circumferential cut-out 182 to the first end surface 174.

The first end surface 174 of the annular body 169 is attached to the second tube end 112 of the tube 108. The annular body 169 receives therein the first end section 160 of the wide tubular portion 154 via the second open end 172, such that the first end section 160 engages with the annular stop 180 and the first annular rib 148a engages with the second end surface 176. The first cover 166 functions as a connector to easily connect / disconnect the flexible actuator 116 and the tube 108. The annular stop 180, the circumferential cut-out 182, and the recess 184 may facilitate attachment of the tube 108 and the flexible actuator 116. The circumferential cut-out 182 fluidly communicates the internal passage 114 and the actuator passage 126. The first cover 166 may be attached to the tubular body 118 of the flexible actuator 116 by friction fit, or gluing. The first cover 166 may be attached to the second tube end 112 of the tube 108 by gluing, or other commonly known joining techniques.

In some embodiments, a thickness T1 of the first end surface 174 is greater than a thickness T2 of the second end surface 176. Further, the internal surface 178 includes a narrow surface portion 186 extending from the first end surface 174 to the annular stop 180. The internal surface 178 further includes a wide surface portion 188 extending from the annular stop 180 to the second end surface 176. Dimensions of the narrow surface portion 186 and the wide surface portion 188 are selected so as to allow precise attachment between the tube 108 and the flexible actuator 116. In some embodiments, the recess 184 tapers from the circumferential cut-out 182 to the first end surface 174. Specifically, the recess 184 tapers inwardly from the circumferential cut-out 182 to the first end surface 174. The recess 184 is configured to receive a portion of the actuating pipe 130. The tapered portion of the recess 184 may allow the actuating pipe 130 to at least partially extend or pass through the recess 184.

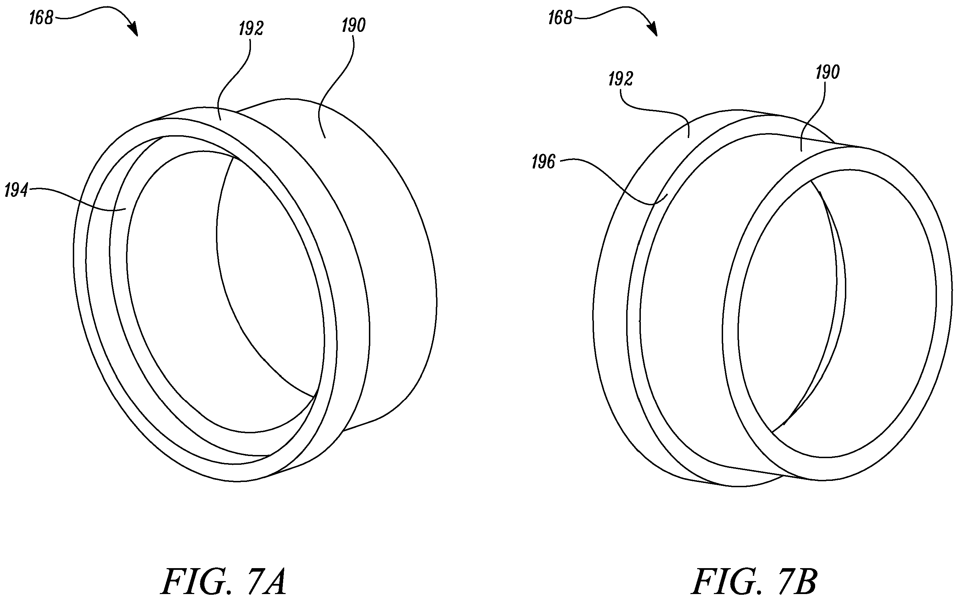

**FIG. 7A** is a front perspective view of the second cover 168, according to an embodiment of the present disclosure. **FIG. 7B** is a rear perspective view of the second cover 168, according to an embodiment of the present disclosure. Referring to FIGS. 2A to 7B, in some embodiments, the second cover 168 attaches the tubular body 118 to the head 102. The second cover 168 includes a narrow annular portion 190 and a wide annular portion 192 disposed around and extending at least partially from the narrow annular portion 190. The narrow annular portion 190 includes an inner annular step surface 194 extending circumferentially within the wide annular portion 192. The wide annular portion 192 includes an outer annular step surface 196 disposed circumferentially around the narrow annular portion 190. The narrow annular portion 190 at least partially receives therein the narrow tubular portion 156 of the tubular body 118, such that the inner annular step surface 194 engages with the annular step surface 158 of the wide tubular portion 154. The wide annular portion 192 receives therein the second end section 162 of the wide tubular portion 154, such that the wide annular portion 192 engages with the second annular rib 148b. The narrow annular portion 190 is at least partially received within the head 102 via the first head end 104.

The second cover 168 functions as a connector to easily connect / disconnect the flexible actuator 116 and the head 102. The second cover 168 may be attached to the tubular body 118 of the flexible actuator 116 by friction fit, or gluing. The second cover 168 may be attached to the first head end 104 of the head 102 by friction fit, gluing, or other commonly known joining techniques.

With reference to FIGS. 1 to 7B, the actuation of the flexible actuator 116 between the non-actuated state S1 and the actuated state S2 may allow the probe 100 to be used for non-destructive testing of the component 50 in confined spaces as well. As the actuated length L2 is greater than the non-actuated length L1, the flexible actuator 116 may remove limitations on a movement of the probe 100, especially for in-situ applications. As a result, the probe 100 may be able to effectively determine cracks and other flaws in the interior of the component 50. Moreover, due to extension of the flexible actuator 116 along the longitudinal axis LA upon switching the flexible actuator 116 from the non-actuated state S1 to the actuated state S2, the probe 100 of the present disclosure may be more effective as compared to conventional probes for non-destructive testing of a component with a curved surface. Therefore, the flexible actuator 116 may improve effectiveness and increase efficiency of the probe 100. The timely detection of cracks and irregularities in the component 50 may improve operational life of the component 50. The probe 100 may allow improved performance of the gas turbine engine 10 by timely determining the cracks and irregularities in the component 50 of the gas turbine engine 10.

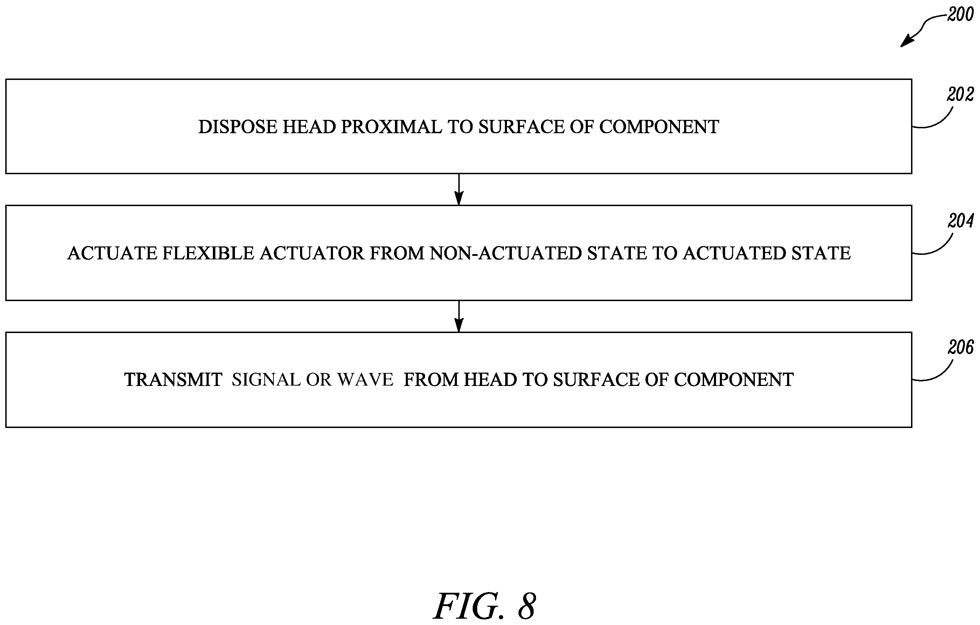

**FIG. 8** is a flowchart illustrating a method 200 for non-destructive testing of the component 50 using the probe 100 of FIG. 2A, according to an embodiment of the present disclosure. Referring to FIGS. 2A, 2B, and 8, at step 202, the method 200 includes disposing, via the tube 108, the head 102 proximal to the surface 52 of the component 50. At step 204, the method 200 further includes actuating the flexible actuator 116 from the non-actuated state S1 to the actuated state S2, such that the second head end 106 of the head 102 is in contact with the surface 52 of the component 50. At step 206, the method 200 further includes transmitting a signal or a wave (e.g. acoustic waves) from the head 102 to the surface 52 of the component 50 for non-destructive testing of the component 50 using the probe 100.

## Claims

1. A probe (100) for non-destructive testing of a component (50), the probe (100) comprising:
a head (102) configured to transmit a signal or a wave to a surface (52) of the component (50) for non-destructive testing of the component (50), the head (102) comprising a first head end (104) facing away from the component (50) and an opposing second head end (106) facing the component (50), wherein the first head end (104) is open;
a tube (108) spaced apart from the head (102) and comprising a first tube end (110) distal to the head (102) and an opposing second tube end (112) proximal to the head (102), wherein each of the first tube end (110) and the second tube end (112) is open, the tube (108) defining an internal passage (114) therein extending between the first tube end (110) and the second tube end (112); and
a flexible actuator (116) disposed between the head (102) and the tube (108), wherein the flexible actuator (116) is attached with the first head end (104) of the head (102) and the second tube end (112) of the tube (108), the flexible actuator (116) defining a longitudinal axis (LA) along its length and configured to be actuated between a non-actuated state (S1) and an actuated state (S2), wherein, in the non-actuated state (S1), the flexible actuator (116) extends for a non-actuated length (L1) along the longitudinal axis (LA), wherein, in the actuated state (S2), the flexible actuator (116) expands axially along the longitudinal axis (LA) relative to the non-actuated state (S1) and extends for an actuated length (L2) along the longitudinal axis (LA), and wherein the actuated length (L2) is greater than the non-actuated length (L1), wherein, upon switching the flexible actuator (116) from the actuated state (S2) to the non-actuated state (S1), the flexible actuator (116) returns to the non-actuated length (L1), and wherein the flexible actuator (116) is remotely actuatable from the first tube end (110) between the non-actuated state (S1) and the actuated state (S2);
the probe being **characterised in that** the flexible actuator (116) has:
a tubular body (118) extending along the longitudinal axis (LA) between a first body end (120) facing the tube (108) and an opposing second body end (122) facing the head (102), the tubular body (118) comprising an inner annular portion (124) defining an actuator passage (126) therethrough and an outer annular portion (128) disposed around the inner annular portion (124), wherein the actuator passage (126) fluidly connects the internal passage (114) of the tube (108) with the head (102), wherein the inner annular portion (124) and the outer annular portion (128) define an internal volume (V1) therebetween, such that the tubular body (118) is inflatable; and
an actuating pipe (130) connected to the tubular body (118) and extending along the longitudinal axis (LA) from the tubular body (118) towards the first tube end (110) of the tube (108), the actuating pipe (130) comprising a first pipe end (132) distal to the tubular body (118) and an opposing second pipe end (134) disposed in fluid communication with the internal volume (V1) of the tubular body (118), wherein the actuating pipe (130) is configured to receive a pressurized fluid through the first pipe end (132);
wherein, upon receiving the pressurized fluid within the internal volume (V1) of the tubular body (118), the tubular body (118) inflates and axially expands along the longitudinal axis (LA), thereby actuating the flexible actuator (116) from the non-actuated state (S1) to the actuated state (S2).

2. The probe (100) of claim 1, wherein the tubular body (118) further comprises a first end wall (140) disposed at the first body end (120) and a second end wall (142) disposed at the second body end (122), wherein the first end wall (140) is connected to the actuating pipe (130), wherein the first end wall (140) and the second end wall (142) together delimit the internal volume (V1), and wherein the first end wall (140) defines an opening (144) therethrough disposed in fluid communication with the first pipe end (132) and the internal volume (V1).

3. The probe (100) of claim 1 or 2, further comprising a fluid pipe (136) at least partially received within the internal passage (114) via the first tube end (110) and fluidly connected to the first pipe end (132) of the actuating pipe (130), wherein the fluid pipe (136) is configured to supply the pressurized fluid to the actuating pipe (130) via the first pipe end (132), such that the flexible actuator (116) is remotely actuatable by the fluid pipe (136).

4. The probe (100) of claim 3, further comprising a pumping device (138) disposed in fluid communication with the fluid pipe (136) and located outside the tube (108), wherein the pumping device (138) is configured to supply the pressurized fluid to the fluid pipe (136).

5. The probe (100) of any preceding claim, wherein the tubular body (118) comprises a cylindrical outer surface (146) extending along the longitudinal axis (LA) and a plurality of annular ribs (148) disposed on the cylindrical outer surface (146) and spaced apart from each other with respect to the longitudinal axis (LA), wherein the plurality of annular ribs (148) defines a plurality of annular grooves (150) therebetween, such that each pair of adjacent annular ribs (148) from the plurality of annular ribs (148) defines therebetween a corresponding annular groove (150) from the plurality of annular grooves (150), and wherein the plurality of annular ribs (148) comprises a first annular rib (148a) disposed proximal to the first body end (120) of the tubular body (118) and a second annular rib (148b) disposed proximal to the second body end (122) of the tubular body (118).

6. The probe (100) of claim 5, further comprising a plurality of rings (152) corresponding to the plurality of annular grooves (150) and disposed around the cylindrical outer surface (146) of the tubular body (118), wherein each ring (152) from the plurality of rings (152) is at least partially received within the corresponding annular groove (15), and wherein the plurality of rings (152) is configured to restrict a radial expansion of the tubular body (118) perpendicular to the longitudinal axis (LA) in response to the inflation by the pressurized fluid.

7. The probe (100) of claim 5 or 6, wherein the tubular body (118) further comprises a wide tubular portion (154) extending along the longitudinal axis (LA) and defining the first body end (120) and the cylindrical outer surface (146), and a narrow tubular portion (156) extending from the wide tubular portion (154) along the longitudinal axis (LA) and defining the second body end (122), wherein the wide tubular portion (154) comprises an annular step surface (158) circumferentially disposed around the narrow tubular portion (156), wherein the wide tubular portion (154) comprises a first end section (160) extending between the first body end (120) and the first annular rib (148a), and a second end section (162) extending between the annular step surface (158) and the second annular rib (148b), and wherein the wide tubular portion (154) and the narrow tubular portion (156) together form a continuous cylindrical internal surface (164) that defines the actuator passage (126).

8. The probe (100) of claim 7, further comprising a first cover (166) attaching the tubular body (118) to the second tube end (112), wherein the first cover (166) comprises:
an annular body (169) comprising a first open end (170) facing the second tube end (112) of the tube (108), an opposing second open end (172), a first end surface (174) disposed at the first open end (170), a second end surface (176) disposed at the second open end (172), and an internal surface (178) extending between the first end surface (174) and the second end surface (176);
an annular stop (180) radially extending from the internal surface (178) of the annular body (169) and disposed proximal to the second end surface (176), the annular stop (180) comprising a circumferential cut-out (182); and
a recess (184) disposed on the internal surface (178) of the annular body (169) and extending from the circumferential cut-out (182) to the first end surface (174);
wherein the first end surface (174) of the annular body (169) is attached to the second tube end (112) of the tube (108); and
wherein the annular body (169) receives therein the first end section (160) of the wide tubular portion (154) via the second open end (172), such that the first end section (160) engages with the annular stop (180) and the first annular rib (148a) engages with the second end surface (176).

9. The probe (100) of claim 8, wherein a thickness (T1) of the first end surface (174) is greater than a thickness (T2) of the second end surface (176), and wherein the internal surface (178) comprises a narrow surface portion (186) extending from the first end surface (174) to the annular stop (180) and a wide surface portion (188) extending from the annular stop (180) to the second end surface (176).

10. The probe (100) of any one of claims 7 to 9, further comprising a second cover (168) attaching the tubular body (118) to the head (102), wherein the second cover (168) comprises a narrow annular portion (190) and a wide annular portion (192) disposed around and extending at least partially from the narrow annular portion (190), wherein the narrow annular portion (190) comprises an inner annular step surface (194) extending circumferentially within the wide annular portion (192), wherein the wide annular portion (192) comprises an outer annular step surface (196) disposed circumferentially around the narrow annular portion (190), wherein the narrow annular portion (190) at least partially receives therein the narrow tubular portion (156) of the tubular body (118), such that the inner annular step surface (194) engages with the annular step surface (158) of the wide tubular portion (154), wherein the wide annular portion (192) receives therein the second end section (162) of the wide tubular portion (154), such that the wide annular portion (192) engages with the second annular rib (148b), and wherein the narrow annular portion (190) is at least partially received within the head (102) via the first head end (104).

11. The probe (100) of any preceding claim, wherein the flexible actuator (116) is integrally manufactured by additive manufacturing.

12. The probe (100) of any preceding claim, wherein the flexible actuator (116) is made of an elastomeric material.

13. The probe (100) of any preceding claim, wherein the probe (100) is an ultrasonic probe that is configured to transmit ultrasonic waves to the surface (52) of the component (50).

14. A method (200) for non-destructive testing of a component using the probe (100) of any preceding claim, the method (200) comprising:
disposing, via the tube (108) of the probe (100), the head (102) proximal to a surface (52) of the component (50);
actuating the flexible actuator (116) from the non-actuated state (S1) to the actuated state (S2), such that the second head end (106) of the head (102) is in contact with the surface (52) of the component (50); and
transmitting a signal or wave from the head (102) to the surface (52) of the component (50).

## Patentansprüche

1. Sonde (100) zum zerstörungsfreien Prüfen eines Bauteils (50), wobei die Sonde (100) Folgendes umfasst:
einen Kopf (102), der dazu konfiguriert ist, ein Signal oder eine Welle an eine Oberfläche (52) des Bauteils (50) zum zerstörungsfreien Prüfen des Bauteils (50) zu übertragen, wobei der Kopf (102) ein erstes Kopfende (104), das von dem Bauteil (50) abgewandt ist, und ein gegenüberliegendes zweites Kopfende (106), das dem Bauteil (50) zugewandt ist, umfasst, wobei das erste Kopfende (104) offen ist;
ein Rohr (108), das von dem Kopf (102) beabstandet ist und ein erstes Rohrende (110) distal zu dem Kopf (102) und ein gegenüberliegendes zweites Rohrende (112) proximal zu dem Kopf (102) umfasst, wobei jedes von dem ersten Rohrende (110) und dem zweiten Rohrende (112) offen ist, wobei das Rohr (108) einen Innendurchgang (114) darin definiert, der sich zwischen dem ersten Rohrende (110) und dem zweiten Rohrende (112) erstreckt; und
einen flexiblen Aktuator (116), der zwischen dem Kopf (102) und dem Rohr (108) angeordnet ist, wobei der flexible Aktuator (116) an dem ersten Kopfende (104) des Kopfes (102) und dem zweiten Rohrende (112) des Rohrs (108) befestigt ist, wobei der flexible Aktuator (116) eine Längsachse (LA) entlang seiner Länge definiert und dazu konfiguriert ist, zwischen einem unbetätigten Zustand (S1) und einem betätigten Zustand (S2) betätigt zu werden, wobei sich der flexible Aktuator (116) in dem unbetätigten Zustand (S1) über eine unbetätigte Länge (L1) entlang der Längsachse (LA) erstreckt, wobei sich der flexible Aktuator (116) in dem betätigten Zustand (S2) relativ zu dem unbetätigten Zustand (S1) axial entlang der Längsachse (LA) ausdehnt und sich über eine betätigte Länge (L2) entlang der Längsachse (LA) erstreckt, und wobei die betätigte Länge (L2) größer als die unbetätigte Länge (L1) ist, wobei beim Schalten des flexiblen Aktuators (116) von dem betätigten Zustand (S2) in den unbetätigten Zustand (S1) der flexible Aktuator (116) zu der unbetätigten Länge (L1) zurückkehrt und wobei der flexible Aktuator (116) von dem ersten Rohrende (110) zwischen dem unbetätigten Zustand (S1) und dem betätigten Zustand (S2) aus der Ferne betätigbar ist;
wobei die Sonde **dadurch gekennzeichnet ist, dass** der flexible Aktuator (116) Folgendes aufweist:
einen rohrförmigen Körper (118), der sich entlang der Längsachse (LA) zwischen einem ersten Körperende (120), das dem Rohr (108) zugewandt ist, und einem gegenüberliegenden zweiten Körperende (122), das dem Kopf (102) zugewandt ist, erstreckt, wobei der rohrförmige Körper (118) einen inneren ringförmigen Abschnitt (124), der einen Aktuatordurchgang (126) durch diesen definiert, und einen äußeren ringförmigen Abschnitt (128), der um den inneren ringförmigen Abschnitt (124) herum angeordnet ist, umfasst, wobei der Aktuatordurchgang (126) eine Fluidverbindung zwischen dem Innendurchgang (114) des Rohrs (108) und dem Kopf (102) herstellt, wobei der innere ringförmige Abschnitt (124) und der äußere ringförmige Abschnitt (128) ein Innenvolumen (V1) dazwischen definieren, sodass der rohrförmige Körper (118) aufblähbar ist; und
eine Betätigungsröhre (130), die mit dem rohrförmigen Körper (118) verbunden ist und sich entlang der Längsachse (LA) von dem rohrförmigen Körper (118) zu dem ersten Rohrende (110) des Rohrs (108) erstreckt, wobei die Betätigungsröhre (130) ein erstes Röhrenende (132) distal zu dem rohrförmigen Körper (118) und ein gegenüberliegendes zweites Röhrenende (134), das in Fluidkommunikation mit dem Innenvolumen (V1) des rohrförmigen Körpers (118) angeordnet ist, umfasst, wobei die Betätigungsröhre (130) dazu konfiguriert ist, ein unter Druck stehendes Fluid durch das erste Röhrenende (132) aufzunehmen;
wobei sich der rohrförmige Körper (118) beim Aufnehmen des unter Druck stehenden Fluids innerhalb des Innenvolumens (V1) des rohrförmigen Körpers (118) aufbläht und sich entlang der Längsachse (LA) axial ausdehnt, wodurch der flexible Aktuator (116) aus dem unbetätigten Zustand (S1) in den betätigten Zustand (S2) betätigt wird.

2. Sonde (100) nach Anspruch 1, wobei der rohrförmige Körper (118) ferner eine erste Endwand (140), die an dem ersten Körperende (120) angeordnet ist, und eine zweite Endwand (142), die an dem zweiten Körperende (122) angeordnet ist, umfasst, wobei die erste Endwand (140) mit der Betätigungsröhre (130) verbunden ist, wobei die erste Endwand (140) und die zweite Endwand (142) zusammen das Innenvolumen (V1) begrenzen und wobei die erste Endwand (140) eine Öffnung (144) dadurch definiert, die in Fluidkommunikation mit dem ersten Röhrenende (132) und dem Innenvolumen (V1) angeordnet ist.

3. Sonde (100) nach Anspruch 1 oder 2, ferner umfassend eine Fluidröhre (136), die mindestens teilweise über das erste Rohrenende (110) innerhalb des Innendurchgangs (114) aufgenommen ist und in Fluidverbindung mit dem ersten Röhrenende (132) der Betätigungsröhre (130) steht, wobei die Fluidröhre (136) dazu konfiguriert ist, das unter Druck stehende Fluid über das erste Röhrenende (132) der Betätigungsröhre (130) zuzuführen, sodass der flexible Aktuator (116) durch die Fluidröhre (136) aus der Ferne betätigbar ist.

4. Sonde (100) nach Anspruch 3, ferner umfassend eine Pumpvorrichtung (138), die in Fluidkommunikation mit der Fluidröhre (136) angeordnet ist und sich außerhalb des Rohrs (108) befindet, wobei die Pumpvorrichtung (138) dazu konfiguriert ist, das unter Druck stehende Fluid der Fluidröhre (136) zuzuführen.

5. Sonde (100) nach einem vorhergehenden Anspruch, wobei der rohrförmige Körper (118) eine zylindrische äußere Oberfläche (146), die sich entlang der Längsachse (LA) erstreckt, und eine Vielzahl von ringförmigen Rippen (148), die auf der zylindrischen äußeren Oberfläche (146) angeordnet und in Bezug auf die Längsachse (LA) voneinander beabstandet sind, umfasst, wobei die Vielzahl von ringförmigen Rippen (148) eine Vielzahl von ringförmigen Nuten (150) dazwischen definiert, sodass jedes Paar von benachbarten ringförmigen Rippen (148) aus der Vielzahl von ringförmigen Rippen (148) dazwischen eine entsprechende ringförmige Nut (150) aus der Vielzahl von ringförmigen Nuten (150) definiert, und wobei die Vielzahl von ringförmigen Rippen (148) eine erste ringförmige Rippe (148a), die proximal zu dem ersten Körperende (120) des rohrförmigen Körpers (118) angeordnet ist, und eine zweite ringförmige Rippe (148b), die proximal zu dem zweiten Körperende (122) des rohrförmigen Körpers (118) angeordnet ist, umfasst.

6. Sonde (100) nach Anspruch 5, ferner umfassend eine Vielzahl von Ringen (152), die der Vielzahl von ringförmigen Nuten (150) entspricht und um die zylindrische äußere Oberfläche (146) des rohrförmigen Körpers (118) herum angeordnet ist, wobei jeder Ring (152) aus der Vielzahl von Ringen (152) mindestens teilweise innerhalb der entsprechenden ringförmigen Nut (15) aufgenommen ist und wobei die Vielzahl von Ringen (152) dazu konfiguriert ist, eine radiale Ausdehnung des rohrförmigen Körpers (118) senkrecht zu der Längsachse (LA) als Reaktion auf das Aufblähen durch das unter Druck stehende Fluid zu beschränken.

7. Sonde (100) nach Anspruch 5 oder 6, wobei der rohrförmige Körper (118) ferner einen breiten rohrförmigen Abschnitt (154), der sich entlang der Längsachse (LA) erstreckt und das erste Körperende (120) und die zylindrische äußere Oberfläche (146) definiert, und einen schmalen rohrförmigen Abschnitt (156), der sich von dem breiten rohrförmigen Abschnitt (154) entlang der Längsachse (LA) erstreckt und das zweite Körperende (122) definiert, umfasst, wobei der breite rohrförmige Abschnitt (154) eine ringförmige Stufenoberfläche (158) umfasst, die in Umfangsrichtung um den schmalen rohrförmigen Abschnitt (156) herum angeordnet ist, wobei der breite rohrförmige Abschnitt (154) einen ersten Endbereich (160), der sich zwischen dem ersten Körperende (120) und der ersten ringförmigen Rippe (148a) erstreckt, und einen zweiten Endbereich (162), der sich zwischen der ringförmigen Stufenoberfläche (158) und der zweiten ringförmigen Rippe (148b) erstreckt, umfasst, und wobei der breite rohrförmige Abschnitt (154) und der schmale rohrförmige Abschnitt (156) zusammen eine durchgehende zylindrische Innenoberfläche (164) ausbilden, die den Aktuatordurchgang (126) definiert.

8. Sonde (100) nach Anspruch 7, ferner umfassend eine erste Abdeckung (166), die den rohrförmigen Körper (118) an dem zweiten Rohrende (112) befestigt, wobei die erste Abdeckung (166) Folgendes umfasst:
einen ringförmigen Körper (169), umfassend ein erstes offenes Ende (170), das dem zweiten Rohrende (112) des Rohrs (108) zugewandt ist, ein gegenüberliegendes zweites offenes Ende (172), eine erste Endoberfläche (174), die an dem ersten offenen Ende (170) angeordnet ist, eine zweite Endoberfläche (176), die an dem zweiten offenen Ende (172) angeordnet ist, und eine Innenoberfläche (178), die sich zwischen der ersten Endoberfläche (174) und der zweiten Endoberfläche (176) erstreckt;
einen ringförmigen Anschlag (180), der sich radial von der Innenoberfläche (178) des ringförmigen Körpers (169) erstreckt und proximal zu der zweiten Endoberfläche (176) angeordnet ist, wobei der ringförmige Anschlag (180) einen Umfangsausschnitt (182) umfasst; und
eine Aussparung (184), die an der Innenoberfläche (178) des ringförmigen Körpers (169) angeordnet ist und sich von dem Umfangsausschnitt (182) zu der ersten Endoberfläche (174) erstreckt;
wobei die erste Endoberfläche (174) des ringförmigen Körpers (169) an dem zweiten Rohrende (112) des Rohrs (108) befestigt ist; und
wobei der ringförmige Körper (169) darin den ersten Endbereich (160) des breiten rohrförmigen Abschnitts (154) über das zweite offene Ende (172) aufnimmt, sodass der erste Endbereich (160) mit dem ringförmigen Anschlag (180) in Eingriff gelangt und die erste ringförmige Rippe (148a) mit der zweiten Endoberfläche (176) in Eingriff gelangt.

9. Sonde (100) nach Anspruch 8, wobei eine Dicke (T1) der ersten Endoberfläche (174) größer als eine Dicke (T2) der zweiten Endoberfläche (176) ist und wobei die Innenoberfläche (178) einen schmalen Oberflächenabschnitt (186), der sich von der ersten Endoberfläche (174) zu dem ringförmigen Anschlag (180) erstreckt, und einen breiten Oberflächenabschnitt (188), der sich von dem ringförmigen Anschlag (180) zu der zweiten Endoberfläche (176) erstreckt, umfasst.

10. Sonde (100) nach einem der Ansprüche 7 bis 9, ferner umfassend eine zweite Abdeckung (168), die den rohrförmigen Körper (118) an dem Kopf (102) befestigt, wobei die zweite Abdeckung (168) einen schmalen ringförmigen Abschnitt (190) und einen breiten ringförmigen Abschnitt (192) umfasst, der um den schmalen ringförmigen Abschnitt (190) herum angeordnet ist und sich mindestens teilweise davon erstreckt, wobei der schmale ringförmige Abschnitt (190) eine innere ringförmige Stufenoberfläche (194) umfasst, die sich in Umfangsrichtung innerhalb des breiten ringförmigen Abschnitts (192) erstreckt, wobei der breite ringförmige Abschnitt (192) eine äußere ringförmige Stufenoberfläche (196) umfasst, die in Umfangsrichtung um den schmalen ringförmigen Abschnitt (190) herum angeordnet ist, wobei der schmale ringförmige Abschnitt (190) darin mindestens teilweise den schmalen rohrförmigen Abschnitt (156) des rohrförmigen Körpers (118) aufnimmt, sodass die innere ringförmige Stufenoberfläche (194) mit der ringförmigen Stufenoberfläche (158) des breiten rohrförmigen Abschnitts (154) in Eingriff gelangt, wobei der breite ringförmige Abschnitt (192) darin den zweiten Endbereich (162) des breiten rohrförmigen Abschnitts (154) aufnimmt, sodass der breite ringförmige Abschnitt (192) mit der zweiten ringförmigen Rippe (148b) in Eingriff gelangt, und wobei der schmale ringförmige Abschnitt (190) mindestens teilweise über das erste Kopfende (104) innerhalb des Kopfs (102) aufgenommen wird.

11. Sonde (100) nach einem vorhergehenden Anspruch, wobei der flexible Aktuator (116) durch additive Herstellung einstückig hergestellt ist.

12. Sonde (100) nach einem vorhergehenden Anspruch, wobei der flexible Aktuator (116) aus einem Elastomermaterial gefertigt ist.

13. Sonde (100) nach einem vorhergehenden Anspruch, wobei die Sonde (100) eine Ultraschallsonde ist, die dazu konfiguriert ist, Ultraschallwellen an die Oberfläche (52) des Bauteils (50) zu übertragen.

14. Verfahren (200) zum zerstörungsfreien Prüfen eines Bauteils unter Verwendung der Sonde (100) nach einem vorhergehenden Anspruch, wobei das Verfahren (200) Folgendes umfasst:
Anordnen des Kopfs (102) proximal zu einer Oberfläche (52) des Bauteils (50) über das Rohr (108) der Sonde (100);
Betätigen des flexiblen Aktuators (116) aus dem unbetätigten Zustand (S1) in den betätigten Zustand (S2), sodass das zweite Kopfende (106) des Kopfes (102) in Kontakt mit der Oberfläche (52) des Bauteils (50) ist; und
Übertragen eines Signals oder einer Welle von dem Kopf (102) an die Oberfläche (52) des Bauteils (50).

## Revendications

1. Sonde (100) destiné au contrôle non destructif d'un composant (50), la sonde (100) comprenant :
une tête (102) conçue pour transmettre un signal ou une onde à une surface (52) du composant (50) en vue d'un contrôle non destructif du composant (50), la tête (102) comprenant une première extrémité de tête (104) tournant le dos au composant (50) et une seconde extrémité de tête opposée (106) faisant face au composant (50), ladite première extrémité de tête (104) étant ouverte ;
un tube (108) espacé de la tête (102) et comprenant une première extrémité de tube (110) distale par rapport à la tête (102) et une seconde extrémité de tube opposée (112) proximale par rapport à la tête (102), chacune de la première extrémité de tube (110) et de la seconde extrémité de tube (112) étant ouverte, le tube (108) définissant un passage intérieur (114) à l'intérieur de celui-ci s'étendant entre la première extrémité de tube (110) et la seconde extrémité de tube (112) ; et
un actionneur souple (116) disposé entre la tête (102) et le tube (108), ledit actionneur souple (116) étant fixé avec la première extrémité de tête (104) de la tête (102) et la seconde extrémité de tube (112) du tube (108), l'actionneur souple (116) définissant un axe longitudinal (LA) sur sa longueur et conçu pour être actionné entre un état non actionné (S1) et un état actionné (S2), dans l'état non actionné (S1), ledit actionneur souple (116) s'étendant sur une longueur non actionnée (L1) le long de l'axe longitudinal (LA), dans l'état actionné (S2), ledit actionneur souple (116) se dilatant axialement le long de l'axe longitudinal (LA) par rapport à l'état non actionné (S1) et s'étendant sur une longueur actionnée (L2) le long de l'axe longitudinal (LA), et ladite longueur actionnée (L2) étant supérieure à la longueur non actionnée (L1), lors de la commutation de l'actionneur souple (116) de l'état actionné (S2) à l'état non actionné (S1), ledit actionneur souple (116) revenant à la longueur non actionnée (L1), et ledit actionneur souple (116) étant actionnable à distance à partir de la première extrémité de tube (110) entre l'état non actionné (S1) et l'état actionné (S2) ;
la sonde étant **caractérisée en ce que** l'actionneur souple (116) comporte :
un corps tubulaire (118) s'étendant le long de l'axe longitudinal (LA) entre une première extrémité de corps (120) faisant face au tube (108) et une seconde extrémité de corps opposée (122) faisant face à la tête (102), le corps tubulaire (118) comprenant une partie annulaire interne (124) définissant un passage d'actionneur (126) à travers celle-ci et une partie annulaire externe (128) disposée autour de la partie annulaire interne (124), ledit passage d'actionneur (126) reliant fluidiquement le passage intérieur (114) du tube (108) à la tête (102), ladite partie annulaire interne (124) et ladite partie annulaire externe (128) définissant un volume interne (V1) entre elles, de sorte que le corps tubulaire (118) puisse être gonflé ; et
un tuyau d'actionnement (130) relié au corps tubulaire (118) et s'étendant le long de l'axe longitudinal (LA) à partir du corps tubulaire (118) vers la première extrémité de tube (110) du tube (108), le tuyau d'actionnement (130) comprenant une première extrémité de tuyau (132) distale par rapport au corps tubulaire (118) et une seconde extrémité de tuyau opposée (134) disposée en communication fluidique avec le volume interne (V1) du corps tubulaire (118), ledit tuyau d'actionnement (130) étant conçu pour recevoir un fluide sous pression à travers la première extrémité de tuyau (132) ;
lors de la réception du fluide sous pression à l'intérieur du volume interne (V1) du corps tubulaire (118), ledit corps tubulaire (118) se gonflant et se dilatant axialement le long de l'axe longitudinal (LA), actionnant ainsi l'actionneur souple (116) de l'état non actionné (S1) à l'état actionné (S2).

2. Sonde (100) de la revendication 1, ledit corps tubulaire (118) comprenant en outre une première paroi d'extrémité (140) disposée au niveau de la première extrémité de corps (120) et une seconde paroi d'extrémité (142) disposée au niveau de la seconde extrémité de corps (122), ladite première paroi d'extrémité (140) étant reliée au tuyau d'actionnement (130), ladite première paroi d'extrémité (140) et ladite seconde paroi d'extrémité (142) délimitant ensemble le volume interne (V1), et ladite première paroi d'extrémité (140) définissant une ouverture (144) à travers celle-ci disposée en communication fluidique avec la première extrémité de tuyau (132) et le volume interne (V1).

3. Sonde (100) de la revendication 1 ou 2, comprenant en outre un tuyau de fluide (136) au moins partiellement reçu à l'intérieur du passage intérieur (114) par l'intermédiaire de la première extrémité de tube (110) et relié fluidiquement à la première extrémité de tuyau (132) du tuyau d'actionnement (130), ledit tuyau de fluide (136) étant conçu pour fournir le fluide sous pression au tuyau d'actionnement (130) par l'intermédiaire de la première extrémité de tuyau (132), de sorte que l'actionneur souple (116) puisse être actionné à distance par le tuyau de fluide (136).

4. Sonde (100) de la revendication 3, comprenant en outre un dispositif de pompage (138) disposé en communication fluidique avec le tuyau de fluide (136) et situé à l'extérieur du tube (108), ledit dispositif de pompage (138) étant conçu pour fournir le fluide sous pression au tuyau de fluide (136).

5. Sonde (100) d'une quelconque revendication précédente, ledit corps tubulaire (118) comprenant une surface externe cylindrique (146) s'étendant le long de l'axe longitudinal (LA) et une pluralité de nervures annulaires (148) disposées sur la surface externe cylindrique (146) et espacées les unes des autres par rapport à l'axe longitudinal (LA), ladite pluralité de nervures annulaires (148) définissant une pluralité de rainures annulaires (150) entre elles, de sorte que chaque paire de nervures annulaires adjacentes (148) parmi la pluralité de nervures annulaires (148) définissent entre elles une rainure annulaire correspondante (150) parmi la pluralité de rainures annulaires (150), et ladite pluralité de nervures annulaires (148) comprenant une première nervure annulaire (148a) disposée proximale par rapport à la première extrémité de corps (120) du corps tubulaire (118) et une seconde nervure annulaire (148b) disposée proximale par rapport à la seconde extrémité de corps (122) du corps tubulaire (118).

6. Sonde (100) de la revendication 5, comprenant en outre une pluralité de bagues (152) correspondant à la pluralité de rainures annulaires (150) et disposées autour de la surface externe cylindrique (146) du corps tubulaire (118), chaque bague (152) parmi la pluralité de bagues (152) étant au moins partiellement reçue à l'intérieur de la rainure annulaire correspondante (15), et la pluralité de bagues (152) étant conçues pour limiter une dilatation radiale du corps tubulaire (118) perpendiculaire à l'axe longitudinal (LA) en réponse au gonflage par le fluide sous pression.

7. Sonde (100) de la revendication 5 ou 6, ledit corps tubulaire (118) comprenant en outre une partie tubulaire large (154) s'étendant le long de l'axe longitudinal (LA) et définissant la première extrémité de corps (120) et la surface externe cylindrique (146), et une partie tubulaire étroite (156) s'étendant à partir de la partie tubulaire large (154) le long de l'axe longitudinal (LA) et définissant la seconde extrémité de corps (122), ladite partie tubulaire large (154) comprenant une surface de gradin annulaire (158) disposée circonférentiellement autour de la partie tubulaire étroite (156), ladite partie tubulaire large (154) comprenant une première section d'extrémité (160) s'étendant entre la première extrémité de corps (120) et la première nervure annulaire (148a), et une seconde section d'extrémité (162) s'étendant entre la surface de gradin annulaire (158) et la seconde nervure annulaire (148b), et ladite partie tubulaire large (154) et ladite partie tubulaire étroite (156) formant ensemble une surface intérieure cylindrique continue (164) qui définit le passage d'actionneur (126).

8. Sonde (100) de la revendication 7, comprenant en outre une première douille (166) fixant le corps tubulaire (118) à la seconde extrémité de tube (112), la première douille (166) comprenant : un corps annulaire (169) comprenant une première extrémité ouverte (170) faisant face à la seconde extrémité de tube (112) du tube (108), une seconde extrémité ouverte opposée (172), une première surface d'extrémité (174) disposée au niveau de la première extrémité ouverte (170), une seconde surface d'extrémité (176) disposée au niveau de la seconde extrémité ouverte (172), et une surface intérieure (178) s'étendant entre la première surface d'extrémité (174) et la seconde surface d'extrémité (176) ;
une butée annulaire (180) s'étendant radialement à partir de la surface intérieure (178) du corps annulaire (169) et disposée proximale par rapport à la seconde surface d'extrémité (176), la butée annulaire (180) comprenant une découpe circonférentielle (182) ; et
un évidement (184) disposé sur la surface intérieure (178) du corps annulaire (169) et s'étendant de la découpe circonférentielle (182) à la première surface d'extrémité (174) ;
ladite première surface d'extrémité (174) du corps annulaire (169) étant fixée à la seconde extrémité de tube (112) du tube (108) ; et
ledit corps annulaire (169) recevant à l'intérieur la première section d'extrémité (160) de la partie tubulaire large (154) par l'intermédiaire de la seconde extrémité ouverte (172), de sorte que la première section d'extrémité (160) vienne en prise avec la butée annulaire (180) et que la première nervure annulaire (148a) vienne en prise avec la seconde surface d'extrémité (176).

9. Sonde (100) de la revendication 8, une épaisseur (T1) de la première surface d'extrémité (174) étant supérieure à une épaisseur (T2) de la seconde surface d'extrémité (176), et ladite surface intérieure (178) comprenant une partie de surface étroite (186) s'étendant de la première surface d'extrémité (174) à la butée annulaire (180) et une partie de surface large (188) s'étendant de la butée annulaire (180) à la seconde surface d'extrémité (176).

10. Sonde (100) de l'une quelconque des revendications 7 à 9, comprenant en outre une seconde douille (168) fixant le corps tubulaire (118) à la tête (102), ladite seconde douille (168) comprenant une partie annulaire étroite (190) et une partie annulaire large (192) disposée autour et s'étendant au moins partiellement à partir de la partie annulaire étroite (190), ladite partie annulaire étroite (190) comprenant une surface de gradin annulaire interne (194) s'étendant circonférentiellement à l'intérieur de la partie annulaire large (192), ladite partie annulaire large (192) comprenant une surface de gradin annulaire externe (196) disposée circonférentiellement autour de la partie annulaire étroite (190), ladite partie annulaire étroite (190) recevant au moins partiellement à l'intérieur la partie tubulaire étroite (156) du corps tubulaire (118), de sorte que la surface de gradin annulaire interne (194) vienne en prise avec la surface de gradin annulaire (158) de la partie tubulaire large (154), ladite partie annulaire large (192) recevant à l'intérieur la seconde section d'extrémité (162) de la partie tubulaire large (154), de sorte que la partie annulaire large (192) vienne en prise avec la seconde nervure annulaire (148b), et ladite partie annulaire étroite (190) étant au moins partiellement reçue à l'intérieur de la tête (102) par l'intermédiaire de la première extrémité de tête (104).

11. Sonde (100) d'une quelconque revendication précédente, ledit actionneur souple (116) étant fabriqué d'un seul tenant par fabrication additive.

12. Sonde (100) d'une quelconque revendication précédente, ledit actionneur souple (116) étant constitué d'un matériau élastomère.

13. Sonde (100) d'une quelconque revendication précédente, ladite sonde (100) étant une sonde ultrasonore qui est conçue pour transmettre des ondes ultrasonores à la surface (52) du composant (50).

14. Procédé (200) permettant le contrôle non destructif d'un composant à l'aide de la sonde (100) d'une quelconque revendication précédente, le procédé (200) comprenant :
la disposition, par l'intermédiaire du tube (108) de la sonde (100), de la tête (102) proximale par rapport à une surface (52) du composant (50) ;
l'actionnement de l'actionneur souple (116) de l'état non actionné (S1) à l'état actionné (S2), de sorte que la seconde extrémité de tête (106) de la tête (102) soit en contact avec la surface (52) du composant (50) ; et
1a transmission d'un signal ou d'une onde de la tête (102) à la surface (52) du composant (50).
